(19) **Europäisches Patentamt / European Patent Office / Office européen des brevets**

(11) **EP 4 293 328 B1**

(12) **FASCICULE DE BREVET EUROPEEN**

(45) Date de publication et mention de la délivrance du brevet:
**06.08.2025  Bulletin 2025/32**

(21) Numéro de dépôt: **23178566.8**

(22) Date de dépôt: **11.06.2023**

(51) Classification Internationale des Brevets (IPC):
**G01H 3/08** (2006.01)

(52) Classification Coopérative des Brevets (CPC):
**G01H 3/08**

(54) **AUTO-DIAGNOSTIC D'UN EQUIPEMENT ELECTRIQUE PAR EMPREINTE SONORE**

SELBSTDIAGNOSE EINER ELEKTRISCHEN VORRICHTUNG DURCH SCHALLABDRUCK

SELF-DIAGNOSIS OF ELECTRICAL EQUIPMENT BY SOUND FINGERPRINTING

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **14.06.2022  FR 2205740**

(43) Date de publication de la demande:
**20.12.2023  Bulletin 2023/51**

(73) Titulaire: **SAGEMCOM BROADBAND SAS**
**92270 Bois-Colombes (FR)**

(72) Inventeurs:
• **BOUVIGNE, Gabriel**
  **92270 BOIS-COLOMBES (FR)**
• **ATZEL, Loïg**
  **92270 BOIS-COLOMBES (FR)**

(74) Mandataire: **Cabinet Boettcher et al**
**5, rue de Vienne**
**75008 Paris (FR)**

(56) Documents cités:
EP-A1- 3 246 674     DE-A1- 102018 124 210
FR-A1- 3 112 017     US-A1- 2018 100 895
US-A1- 2020 103 894

EP 4 293 328 B1

**Description**

L'invention concerne le domaine des équipements électriques intégrant ou pouvant être reliés à au moins un microphone.

ARRIERE PLAN DE L'INVENTION

La mise en œuvre d'une maintenance prédictive efficace et précise est particulièrement intéressante pour l'utilisateur d'un équipement électrique de type « multimédia » ou « grand public », mais aussi pour le fabricant dudit équipement électrique - et ce, quel que soit l'équipement en question : boîtier décodeur « classique » (ou STB, pour *Set-Top Box*), boîtier décodeur amélioré (intégrant par exemple un ou des haut-parleurs), enceinte connectée, ordinateur, *smartphone,* console de jeux, etc.

La maintenance prédictive consiste à surveiller un équipement électrique en opération et à comparer les données mesurées avec des données préalablement recueillies sur d'autres équipements du même type, afin d'anticiper la survenue d'une panne. La maintenance prédictive permet donc d'agir avant que l'utilisateur ne soit privé de la jouissance de son équipement.

La prise en compte anticipée d'une panne est bien sûr positive pour l'image du fabricant auprès des utilisateurs. La maintenance prédictive permet de plus au fabricant d'acquérir un certain nombre d'informations particulièrement pertinentes et utiles car issues d'équipements en service, et notamment des informations sur les modes de défaillance de l'équipement et sur des particularités possiblement associées à certains lots d'équipements.

Il est bien sûr avantageux, pour le fabricant, que la maintenance prédictive soit réalisée à moindre coût et sans nécessiter un nombre élevé de composants dédiés à cette surveillance, et que la maintenance prédictive permette de surveiller le plus grand nombre possible de composants de l'équipement électrique.

Le document DE 10 2018 124210 A1 décrit un disjoncteur dans lequel des microphones sont intégrés. Ce document enseigne d'analyser le signal sonore capturé par les microphones pour détecter une défaillance du disjoncteur.

OBJET DE L'INVENTION

L'invention a pour objet de mettre en œuvre une maintenance prédictive plus complète et donc plus efficace sur un équipement électrique qui intègre ou qui est relié à un ou des microphones.

RESUME DE L'INVENTION

En vue de la réalisation de ce but, on propose un procédé de diagnostic d'un équipement électrique qui comporte :

- une unité de traitement ;
- au moins un microphone interne, et/ou des moyens de connexion à au moins un microphone externe ;
- des composants électriques autres que des microphones ou des haut-parleurs ;

le procédé de diagnostic étant mis en œuvre au moins partiellement dans l'unité de traitement et comprenant les étapes de :

- acquérir un signal audio reçu produit, à partir d'une capture d'un signal sonore ambiant, par le au moins un microphone interne ou par le au moins un microphone externe ;
- produire à partir du signal audio reçu des paramètres de surveillance qui sont représentatifs d'un signal sonore parasite compris dans le signal sonore ambiant et émis par au moins l'un des composants électriques ;
- détecter à partir des paramètres de surveillance une anomalie sonore résultant d'une défaillance actuelle ou à venir d'au moins un composant électrique de l'équipement électrique,

le procédé comprenant en outre les étapes :

- de détecter si l'équipement électrique, au moment de l'étape d'acquisition, est en train d'émettre un signal sonore utile, qui est formé de sons émis volontairement ;
- si c'est le cas, d'appliquer le signal audio reçu en entrée d'un module d'annulation d'écho, pour produire un signal résultant, les paramètres de surveillance étant obtenus à partir du signal résultant.

Le procédé de diagnostic selon l'invention consiste donc à capturer grâce au(x) microphone(s) le signal sonore parasite émis par les composants électriques, et à détecter à partir du signal sonore parasite une défaillance instantanée ou prochaine d'un ou de plusieurs composants de l'équipement électrique.

Le procédé de diagnostic permet donc, par une analyse d'empreinte sonore, de surveiller des composants électriques de l'équipement électrique, qui ne sont pas des composants normalement prévus pour émettre ou capturer des signaux sonores.

Cette méthode de surveillance, particulièrement astucieuse, permet d'élargir la surveillance à des composants habituellement non surveillés ou difficiles à surveiller et ce, de manière peu coûteuse, puisqu'aucun composant matériel (*hardware*) additionnel n'est requis pour cette surveillance. En particulier, le procédé de diagnostic ne nécessite pas que l'équipement électrique intègre ou soit relié à un haut-parleur, et ne requiert pas d'instrument de diagnostic externe.

On propose de plus un procédé de diagnostic tel que précédemment décrit, dans lequel l'étape de détection comprend les étapes de :

- exécuter une inférence d'un modèle d'apprentissage automatique préalablement entraîné, en utilisant les paramètres de surveillance comme données d'entrée, le modèle d'apprentissage automatique étant un modèle de classification ;
- détecter l'anomalie sonore en fonction d'au moins une valeur de sortie obtenue par l'exécution de ladite inférence.

On propose de plus un procédé de diagnostic tel que précédemment décrit, dans lequel les paramètres de surveillance forment des spectrogrammes courants issus du signal audio reçu, et dans lequel le modèle d'apprentissage automatique a été entraîné en utilisant une base de données comprenant des images représentant des spectrogrammes d'entraînement.

On propose de plus un procédé de diagnostic tel que précédemment décrit, dans lequel le modèle d'apprentissage automatique est un modèle de réseau de neurones artificiels de type réseau neuronal convolutif ou perceptron multicouche.

On propose de plus un procédé de diagnostic tel que précédemment décrit, comprenant en outre l'étape, si le signal audio reçu est appliqué en entrée du module d'annulation d'écho, d'augmenter une fréquence d'échantillonnage du signal résultant, de manière à obtenir un signal rééchantillonné ayant une fréquence d'échantillonnage égale à celle du signal audio reçu, les paramètres de surveillance étant obtenus à partir du signal rééchantillonné.

On propose de plus un procédé de diagnostic tel que précédemment décrit, comprenant l'étape, si le signal audio reçu a été appliqué en entrée du module d'annulation d'écho, d'utiliser un premier modèle d'inférence, et d'utiliser un deuxième modèle d'inférence sinon.

On propose de plus un procédé de diagnostic tel que précédemment décrit, comprenant en outre les étapes de :

- réaliser une pluralité d'acquisitions du signal audio reçu ;
- exécuter une inférence du modèle d'apprentissage pour chaque acquisition ;
- réaliser un premier filtrage des valeurs de sortie pour obtenir au moins une valeur filtrée ;
- comparer la valeur filtrée avec un premier seuil prédéfini et/ou une variation de la valeur filtrée sur une première durée prédéfinie avec un deuxième seuil prédéfini pour détecter l'anomalie sonore.

On propose de plus un procédé de diagnostic tel que précédemment décrit, l'unité de traitement comportant un NPU dans lequel est réalisée au moins l'exécution de l'inférence du modèle d'apprentissage automatique.

On propose de plus un procédé de diagnostic tel que précédemment décrit, dans lequel l'étape de détection consiste à comparer les paramètres de surveillance avec des troisièmes seuils prédéfinis et/ou à comparer des variations des paramètres de surveillance, sur une deuxième durée prédéfinie, avec des quatrièmes seuils prédéfinis pour détecter l'anomalie sonore.

On propose de plus un procédé de diagnostic tel que précédemment décrit, comprenant en outre les étapes de :

- décomposer le signal audio reçu en signaux audio élémentaires sur des sous-bandes de fréquences ;
- calculer une valeur d'énergie élémentaire de chaque signal audio élémentaire, les paramètres de surveillance étant obtenus à partir des valeurs d'énergie élémentaire.

On propose de plus un procédé de diagnostic tel que précédemment décrit, comprenant en outre les étapes de :

- réaliser une pluralité d'acquisitions du signal audio reçu ;
- pour chaque sous-bande de fréquences, réaliser un deuxième filtrage sur les valeurs d'énergie élémentaire associées à ladite sous-bande de fréquences pour produire une valeur d'énergie élémentaire filtrée associée à ladite sous-bande de fréquences, les paramètres de surveillance étant les valeurs d'énergie élémentaire filtrées.

On propose de plus un procédé de diagnostic tel que précédemment décrit, comprenant en outre les étapes de :

- produire une représentation spectrale du signal audio reçu ;
- détecter des pics dans la représentation spectrale ;

les paramètres de surveillance étant obtenus à partir de couples comprenant chacun une fréquence ou une sous-bande de fréquences, et une amplitude d'un pic à ladite fréquence ou dans ladite sous-bande de fréquences.

On propose de plus un procédé de diagnostic tel que précédemment décrit, comprenant en outre les étapes de :

- réaliser une pluralité d'acquisitions du signal audio reçu ;
- pour chaque fréquence ou sous-bande de fréquences, réaliser un troisième filtrage sur les amplitudes des pics associés à ladite fréquence ou sous-bande de fréquences pour produire une amplitude de pic filtrée associée à ladite fréquence ou sous-bande de fréquences, les paramètres de surveillance étant les amplitudes de pic filtrées.

On propose de plus un procédé de diagnostic tel que précédemment décrit, comprenant l'étape de conserver dans un historique long, pour chaque fréquence ou sous-bande de fréquences, une moyenne d'un nombre prédéterminé des amplitudes de pic filtrées les plus faibles.

On propose de plus un équipement électrique comportant :

- une unité de traitement comprenant un NPU ;
- au moins un microphone interne, et/ou des moyens de connexion à au moins un microphone externe ;
- des composants électriques autres que des microphones ou des haut-parleurs ;

l'unité de traitement étant agencée pour mettre en œuvre le procédé de diagnostic tel que précédemment décrit, et le NPU étant agencé pour réaliser au moins l'exécution de l'inférence du modèle d'apprentissage automatique.

On propose de plus un équipement électrique tel que précédemment décrit, l'équipement électrique étant un boîtier décodeur.

On propose de plus un programme d'ordinateur comprenant des instructions qui conduisent l'unité de traitement de l'équipement électrique tel que précédemment décrit à exécuter les étapes du procédé de diagnostic tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

BREVE DESCRIPTION DES DESSINS

Il sera fait référence aux dessins annexés parmi lesquels :

[Fig. 1] la figure 1 représente schématiquement un boîtier décodeur dans lequel est mise en œuvre l'invention ;
[Fig. 2] la figure 2 est un graphique représentant un spectrogramme comprenant un bruit anormal ;
[Fig. 3] la figure 3 représente des étapes d'un procédé de diagnostic selon un premier mode de réalisation de l'invention ;
[Fig. 4] la figure 4 est un graphique comprenant une courbe de la réponse fréquentielle d'un microphone ;
[Fig. 5] la figure 5 représente des étapes d'un traitement des données post-classification ;
[Fig. 6] la figure 6 représente des étapes d'un procédé de diagnostic selon un deuxième mode de réalisation de l'invention ;
[Fig. 7] la figure 7 est un graphique comprenant une courbe d'une représentation fréquentielle obtenue par mise en œuvre d'une FFT sur le signal audio reçu ;
[Fig. 8] la figure 8 est un graphique comprenant un spectrogramme obtenu pour un signal audio reçu similaire à celui de la figure 7.

DESCRIPTION DETAILLEE DE L'INVENTION

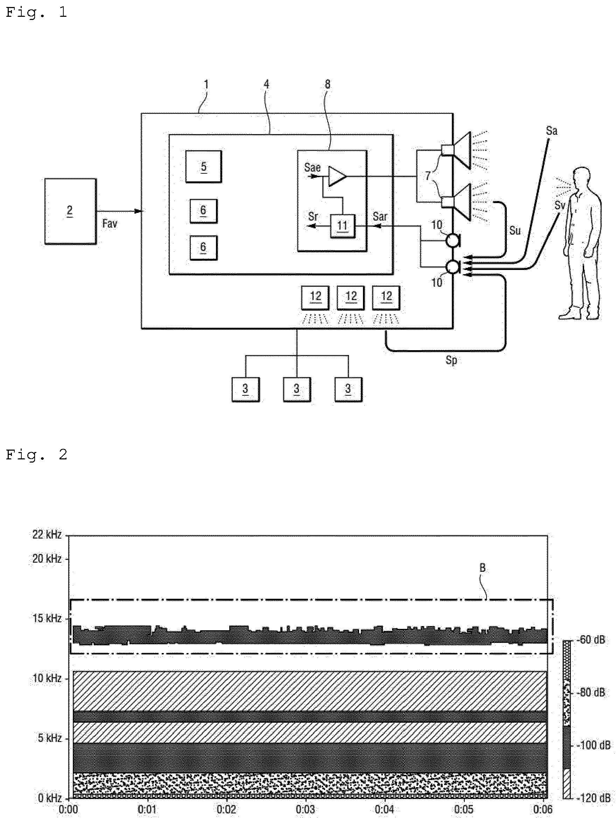

En référence à la figure 1, un boîtier décodeur audio-vidéo 1 (ou *Set-Top Box,* en anglais) permet de transmettre un flux audio-vidéo Fav, produit par une source 2, à un ou plusieurs équipements externes 3 qui restituent le flux audio-vidéo Fav.

La source 2 est par exemple un réseau de diffusion. Le réseau de diffusion peut être un réseau de télévision par satellite, une connexion Internet, un réseau de télévision numérique terrestre (TNT), un réseau de télévision par câble, etc. La source 2 peut aussi être un autre équipement connecté au boîtier décodeur 1, et par exemple un lecteur de CD, de DVD ou de BlueRay. La source 2 peut aussi être un support de stockage tel qu'une clef USB ou une carte mémoire connectée au boîtier décodeur 1, ou encore un support de stockage interne au boitier décodeur 1.

Les équipements externes 3 comprennent ici un téléviseur et des enceintes externes.

Le boîtier décodeur 1 comporte tout d'abord une unité de traitement 4.

L'unité de traitement 4 comprend un ou plusieurs composants de traitement, et par exemple un processeur ou un microprocesseur quelconque(s), généraliste(s) ou spécialisé(s) (par exemple un DSP, pour *Digital Signal Processor,* ou un GPU, pour *Graphics Processing Unit*), un microcontrôleur, ou bien un circuit logique programmable tel qu'un FPGA (pour *Field Programmable Gate Arrays*) ou un ASIC (pour *Application Specific Integrated Circuit*).

Ici, parmi ce ou ces composants de traitement, on trouve un NPU 5 (pour *Neural Processing Unit,* que l'on peut traduire par accélérateur d'intelligence artificielle), qui est un microprocesseur spécialement adapté à la mise en œuvre d'applications d'intelligence artificielle.

L'unité de traitement 4 comprend aussi des mémoires 6. Au moins l'une de ces mémoires 6 forme un support d'enregistrement lisible par ordinateur, sur lequel est enregistré au moins un programme d'ordinateur comprenant des instructions qui conduisent l'unité de traitement 4 à exécuter au moins certaines des étapes du procédé de diagnostic selon l'invention. L'une de ces mémoires 6 peut être intégrée dans le NPU 5 ou dans un autre composant de traitement.

Le boîtier décodeur 1 comprend un ou des haut-parleurs internes 7, et un module d'émission/réception sonore 8 qui est ici intégré dans l'unité de traitement 4. Le boîtier décodeur 1 est ainsi capable de restituer des signaux sonores dits « utiles » Su à partir de signaux audio émis Sae produit par le module d'émission sonore 8 et provenant par exemple du flux audio-vidéo Fav. Par signaux sonores « utiles », on entend des sons émis volontairement, par exemple de la musique.

L'émission des signaux sonores utiles Su est possiblement synchronisée avec l'émission sonore réalisée par les équipements externes 3.

Le boîtier décodeur 1 comprend de plus un ou des microphones internes 10, qui lui permettent de mettre en œuvre une fonction de reconnaissance vocale. Lorsque l'utilisateur prononce un signal vocal Sv comprenant un mot-clef, ce signal vocal est capturé par les microphones internes 10, qui produisent alors un signal audio reçu Sar. Le signal audio reçu Sar est analysé par le module d'émission/réception sonore 8 qui extrait des commandes vocales du signal audio reçu Sar. Le boîtier décodeur 1 effectue alors les actions correspondant aux commandes vocales. Alternativement, le signal audio reçu Sar peut être transmis par le boîtier décodeur 1 à des serveurs distants via Internet. Les serveurs distants analysent le signal audio reçu Sar, extraient les commandes vocales, et transmettent les commandes contenues dans le signal vocal Sv au boîtier décodeur 1, qui effectue alors les actions correspondant aux commandes vocales.

Le boîtier décodeur 1 intègre aussi un module d'annulation d'écho 11 (AEC, pour *Acoustic Echo Cancellation*), qui est ici intégré dans le module d'émission/réception sonore 8. En effet, lorsqu'un utilisateur prononce un signal vocal Sv comprenant une commande vocale et que, simultanément, le boîtier décodeur 1 restitue un signal sonore utile Su (de la musique par exemple), les microphones internes 10 du boîtier décodeur 1 capturent le signal sonore ambiant Sa qui comprend le signal vocal Sv émis par l'utilisateur et le signal sonore utile Su émis par les haut-parleurs internes 7 (et éventuellement par les haut-parleurs des équipements externes 3). Le signal audio reçu Sar produit par les microphones internes 10 comprend donc à la fois le signal vocal Sv et le signal sonore utile Su, ce qui dégrade la qualité de la reconnaissance vocale. L'interprétation de la commande vocale est donc susceptible d'être perturbée par le phénomène d'écho.

Le module d'annulation d'écho 11 acquiert donc le signal audio émis Sae et le signal audio reçu Sar produit par les microphones internes 10. Le module d'annulation d'écho 11 retranche au signal audio reçu Sar le signal audio émis Sae pour fournir un signal résultant Sr « nettoyé », aussi proche que possible du signal vocal Sv (et ne contenant par le signal sonore utile Su). C'est ce signal résultant Sr qui est analysé pour détecter le mot-clef et pour réaliser la reconnaissance vocale.

Pour mettre en œuvre les fonctions qui viennent d'être décrites, et toutes les autres fonctions réalisées par un boîtier décodeur « classique », le boîtier décodeur 1 comporte une pluralité de composants électriques 12 autres que des microphones ou des haut-parleurs. Le procédé de diagnostic selon l'invention vise à surveiller ces composants électriques 12. La surveillance est basée sur l'analyse du signal sonore parasite Sp produit par ces composants électriques 12. Le procédé de diagnostic selon l'invention n'a donc pas pour but d'analyser la qualité d'émission des haut-parleurs internes 7 ni la qualité de réception des microphones internes 10.

On sait en effet que les composants tels que les bobines ou les condensateurs peuvent émettre un bruit de fonctionnement lors du passage du courant.

Tout dispositif électronique utilisant des bobines, selfs, solénoïdes, auto-inductances, transformateurs (ces composants sont tous basés sur une bobine, et peuvent avoir des appellations différentes selon leur tâche sur le circuit) et tout autre composant impliquant les lois de l'électromagnétisme décrites par les équations de Maxwell, sont concernés par ce phénomène.

Le bruit parasite est bien souvent de faible amplitude et peut être présent lors d'un fonctionnement « normal », mais le phénomène a tendance à s'amplifier avec l'usure de l'équipement. Lorsque le bruit provient d'un élément basé sur une bobine, il est souvent appelé en anglais *« coil whine »* (pourrait être traduit par « sifflement de bobine », même s'il ne s'agit pas toujours d'un sifflement).

Le bruit d'une bobine est lié au principe de résonance mécanique produite dans la bobine à la fréquence du courant qui la traverse. D'un point de vue technique, une bobine est un enroulement d'un fil conducteur autour d'un noyau en matériau ferromagnétique (que l'on appelle aussi un barreau magnétostrictif). Si la fréquence du signal (courant) est en résonance avec le fil autour du noyau, cela provoque des micro-vibrations ultra-rapides de la bobine dues à la magnétostriction (qui est le phénomène de déformation d'un corps ferromagnétique soumis à l'influence de champs magnétiques).

Le bruit peut être constant lors de certaines périodes de fonctionnement, ou bien être intermittent. Par exemple, un appel de courant soudainement élevé peut causer un bruit ponctuel (de type « tick »). Il peut alors arriver qu'un traitement « lourd » effectué de manière ponctuelle et brève par un processeur, et qui soit répété, cause une séquence de bruits espacés (« tick...tick...tick »).

Par exemple, il peut arriver que le décodage de trames I (intra) d'un flux vidéo, du fait de la taille très importante de ces trames, cause un appel de charge ponctuel au niveau des étages d'alimentation du SoC (pour *« System On a Chip »*, que l'on peut traduire par « système sur puce »), du fait d'une utilisation intensive des unités de décodage arithmétique du flux vidéo (lorsqu'un codage entropique de type CABAC est utilisé). Il est parfois possible que cela provoque un bruit émis par les bobines à chaque décodage de trame I, ce qui causera un bruit de fréquence quasiment fixe, mais intermittent.

Ces bruits se produisent, dans l'absolu, pendant la totalité du fonctionnement du boîtier décodeur 1. Ils sont cependant la plupart du temps inaudibles pour un humain, soit parce que leur fréquence est située hors du spectre audible (qui va d'environ 20Hz à environ 20kHz), soit parce que leur amplitude est trop faible pour être entendue à une distance d'utilisation normale du boîtier décodeur 1.

Lorsque le courant varie, le champ électromagnétique cause une variation des forces appliquées sur la bobine, entrainent une succession de déformations de celle-ci. Dans des cas extrêmes, ceci peut conduire à la destruction de la bobine (« claquage » de bobine), mais la plupart du temps ceci entraine simplement une vibration. L'effet est d'autant plus prononcé que le signal passant à travers la bobine augmente et se rapproche de sa fréquence de résonance magnétique.

Une évolution dans le temps du bruit de fonctionnement, telle qu'une fréquence différente ou une amplitude plus élevée, peuvent indiquer une défaillance prochaine du boîtier décodeur 1. Le défaut peut être lié au composant électrique 12 émettant le bruit, mais peut aussi être lié à une défaillance ou un vieillissement d'un autre composant électrique 12, entrainant un changement de fonctionnement du composant émettant le bruit. Ainsi, une anomalie sonore, présente dans un signal sonore parasite Sp émis par un ou plusieurs premiers composants électriques (appartenant aux composants électriques 12), peut résulter d'une défaillance actuelle ou à venir d'un ou de plusieurs deuxièmes composants électriques (appartenant aussi aux composants électriques 12) distincts du ou des premiers composants électriques 12.

Ici, par « défaillance d'un composant », on entend un fonctionnement non nominal d'un composant, qui conduit potentiellement à un fonctionnement non nominal présent ou futur du boîtier décodeur 1. Le composant peut demeurer opérationnel, mais il présente au moins une caractéristique qui n'est plus conforme à sa spécification technique ou bien dont la variation va à terme la rendre non conforme à sa spécification technique.

La défaillance peut être actuelle ou à venir. Le procédé de diagnostic peut donc détecter une défaillance présente au moment de la détection, ou bien qui va se produire dans le futur.

On voit par exemple sur la figure 2 un spectrogramme comprenant un bruit anormal B produit par une bobine. La fréquence de ce bruit est proche de 13kHz.

Le procédé de diagnostic consiste à capturer le signal sonore ambiant Sa, et à analyser le signal sonore parasite Sp compris dans le signal sonore ambiant Sa et émis par un ou plusieurs des composants électriques 12, de manière à détecter une anomalie sonore résultant d'une défaillance d'un ou de plusieurs composants électriques 12 du boîtier décodeur 1. Par « signal sonore parasite », on entend donc un signal sonore émis de manière fortuite, et donc dont l'émission n'est pas souhaitée. Comme on vient de le voir, l'anomalie sonore peut être par exemple une augmentation de l'intensité du signal sonore parasite, mais aussi par exemple une diminution de l'amplitude du signal sonore parasite.

On décrit tout d'abord un procédé de diagnostic selon un premier mode de réalisation de l'invention.

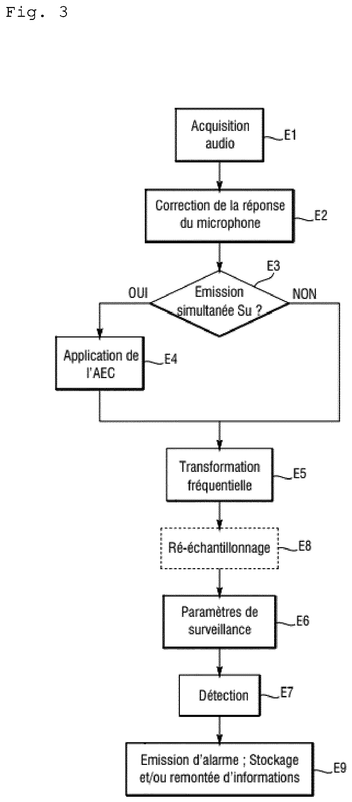

En référence à la figure 3, le procédé de diagnostic débute par une étape d'acquisition audio (étape E1). Les microphones internes 10 capturent le signal sonore ambiant Sa, et le module d'émission/réception sonore 8 de l'unité de traitement 4 acquiert le signal audio reçu Sar produit par les microphones internes 10.

Pour chaque microphone interne 10, il est préférable que le taux d'échantillonnage soit élevé (44.1kHz, 48kHz, voir plus), afin de permettre la détection de sons de hautes fréquences. Comme cela est connu dans le domaine du traitement du signal, la fréquence d'échantillonnage doit théoriquement être du double de la plus haute fréquence que l'on souhaite capter. Le module d'émission/réception sonore 8 comprend des filtres passe-bas pour éviter le repliement de spectre, qui présentent une bande de transition d'une certaine largeur fréquentielle. Il est donc, pratiquement, uniquement possible de capter correctement des sons allant jusqu'à une fréquence située légèrement en dessous de la moitié de la fréquence d'échantillonnage. Par exemple, on estime qu'une fréquence d'échantillonnage de 44.1kHz permet de capter des sons allant jusqu'à 20 (limite haute de l'audition humaine non dégradée) ou 21kHz. Une fréquence d'échantillonnage de 48kHz ou plus permettra donc de capter des sons inaudibles pour un humain, mais qui peuvent tout de même être représentatifs d'un défaut de composants.

Il faut bien évidemment s'assurer que ces sons soient également dans la plage de sensibilité des microphones internes 10 : si par exemple les microphones internes 10 ne peuvent capter des signaux que jusqu'à 23kHz, une fréquence d'échantillonnage de 88.2kHz serait inutile, et l'on se limitera alors à un échantillonnage à 48kHz.

Les microphones internes 10 peuvent être des microphones à sortie numérique, et peuvent donc intégrer chacun un convertisseur analogique-numérique. Les microphones internes 10 peuvent être de type MEMS.

On note que la capture du signal sonore ambiant Sa est également réalisable par le biais d'un ou de plusieurs microphones externes, qui peuvent être des équipements individuels ou bien qui peuvent être intégrés dans d'autres appareils permettant l'accès aux enregistrements. Le boîtier décodeur 1 comprend alors des moyens de connexion au ou aux microphones externes, qui comprennent par exemple une prise jack ou USB, ou bien tout type de moyens de communication avec les appareils intégrant ces microphones externes.

Les microphones internes 10 sont cependant préférables, du fait de leur proximité immédiate avec les bruits/sons que l'on souhaite capter.

Il fréquent que le bruit émis par les composants électriques 12 du boîtier décodeur 1 change en fonction de l'utilisation qui est faite du boîtier décodeur 1 (l'utilisation influant sur le courant nécessaire).

Avantageusement, l'unité de traitement 4 réalise donc plusieurs captures et enregistrements du signal sonore ambiant Sa, dans des conditions d'utilisation différentes, par exemple lorsque le boîtier décodeur 1 est peu sollicité et lorsque le boîtier décodeur 1 est plus sollicité (exemple : décodage de plusieurs flux vidéo et affichage de ceux-ci, comme lorsque le mode PiP, pour *Picture In Picture*, est activé).

La durée des enregistrements réalisés devra permettre l'utilisation de modules de détection (et donc ne devra pas être trop courte), tout en évitant que l'analyse ne soit trop « lourde » en matière de traitement. Une durée d'environ 1s est un bon compromis, bien que d'autres durées soient envisageables.

La fréquence de réalisation des mesures est définie de la manière suivante. Le vieillissement des composants électriques 12 étant un phénomène normalement très progressif (à l'exception notable de la défaillance imminente d'un condensateur, causant un sifflement très peu de temps avant la panne), il est raisonnable de réaliser des mesures assez espacées, par exemple 1 fois par semaine.

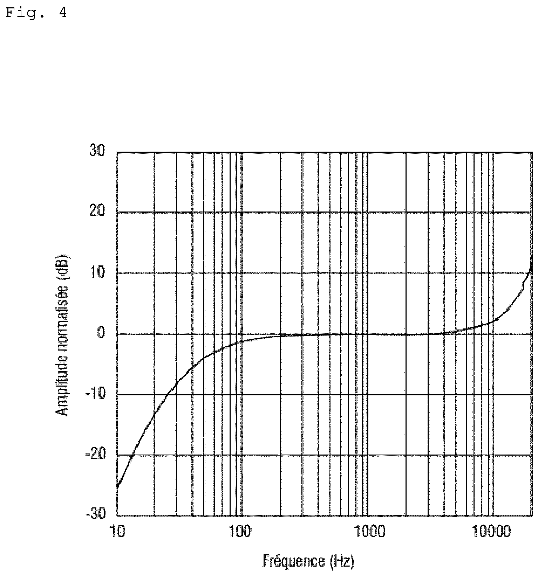

De nombreux microphones ont une réponse fréquentielle qui n'est pas constante. On voit par exemple sur la figure 4 la réponse fréquentielle d'un microphone connu. Cette réponse fréquentielle est croissante jusqu'à 200Hz environ, puis constante, puis croissante à partir de 3kHz environ.

Avantageusement, l'unité de traitement 4 met donc en œuvre une compensation du signal audio reçu Sar en appliquant sur le signal audio reçu Sar une égalisation, afin de restaurer une réponse fréquentielle plus « plate », particulièrement dans les hautes fréquences (où les bruits de composants sont les plus susceptibles d'arriver) : étape E2.

L'unité de traitement 4 détecte alors si, au moment de la capture du signal sonore ambiant Sa, le boîtier décodeur 1 est en train ou non de restituer un signal sonore utile Su : étape E3.

Si le boîtier décodeur 1 est en train de restituer un signal sonore utile Su, par le biais des haut-parleurs internes 7 ou bien via une sortie sonore (par exemple une sortie audio analogique ou numérique, ou via le signal HDMI destiné au téléviseur), il est préférable d'éliminer le signal sonore utile Su du signal audio reçu Sar pour mieux détecter une potentielle anomalie sonore dans le signal audio reçu Sar.

Le signal audio reçu Sar et le signal audio émise Sae sont donc appliqués en entrée du module d'annulation d'écho 11, afin d'éliminer autant que possible le signal audio émis du signal audio reçu, et ainsi obtenir un signal audio résultant Sr : étape E4.

Il est à noter que certains modules d'annulation d'écho sont dédiés au traitement ultérieur de la voix, et sont de ce fait limités en sortie à un signal échantillonné à 8kHz. Il est donc très probable que le boîtier décodeur 1 puisse capter un signal à large bande lorsque la fonction de lecture audio n'est pas active, mais qu'il se contente d'un signal à bande plus limitée lorsque la fonction de lecture audio est active.

Les données issues de l'enregistrement sont initialement des représentations temporelles, de type PCM (*Pulse Code Modulation*).

Ce type de représentation est peu approprié à l'analyse fréquentielle, et il convient donc, suite à l'étape E3 ou à l'étape E4 (selon que le module d'annulation d'écho 11 est utilisé ou non), de transformer le signal audio reçu (temporel) en une représentation fréquentielle : étape E5.

La représentation fréquentielle est normalement dotée de deux composantes par fréquence : la phase, et l'amplitude. Ici, la phase n'apporte pas d'information utile pour le procédé de diagnostic, et l'unité de traitement 4 conserve uniquement l'information d'amplitude en fonction de la fréquence.

L'unité de traitement 4 extrait alors du signal audio reçu Sar des paramètres de surveillance, les paramètres de surveillance étant représentatifs du signal sonore parasite Sp compris dans le signal sonore ambiant Sa et émis par au moins l'un des composants électriques 12 : étape E6. Puis, l'unité de traitement détecte à partir des paramètres de surveillance une anomalie sonore résultant d'une défaillance d'au moins un composant électrique 12 du boîtier décodeur 1 : étape E7.

Les paramètres de surveillance forment ici un spectrogramme du signal audio reçu Sar (ou du signal résultant Sr) : pour chaque enregistrement réalisé du signal audio reçu, on produit donc un spectrogramme.

La détection de l'anomalie sonore à partir des paramètres de surveillance est une détection par classification basée sur l'image du spectrogramme.

La classification utilise un modèle d'inférence. Or, il est nécessaire que le spectrogramme, formant les données d'entrée du modèle d'inférence, couvre toujours la même gamme de fréquences, sans quoi la classification basée sur l'image du spectrogramme ne peut pas fonctionner correctement.

Cependant, comme on vient de le voir, il est possible que le module d'annulation d'écho 11 ait été utilisé pour traiter le signal audio reçu Sar : c'est le cas si le boîtier décodeur 1 était en train de restituer un signal sonore utile Su lors de la capture du signal sonore ambiant Sa (les paramètres de surveillance sont alors obtenus à partir du signal résultant Sr).

Or, si le module d'annulation d'écho 11 a été activé, il y a deux types de signal résultant Sr possibles en sortie du module d'annulation d'écho 11 : un signal ayant la même fréquence d'échantillonnage que le signal audio reçu Sar, mais limité en bande passante, ou bien un signal ayant une fréquence d'échantillonnage réduite par rapport au signal audio reçu Sar.

Dans le cas où le signal résultant Sr est limité en bande passante, aucun traitement additionnel n'est requis. Par contre, dans le cas où le signal résultant Sr a une fréquence d'échantillonnage réduite, une étape supplémentaire est nécessaire pour obtenir un signal correctement « classifiable » : il faut augmenter la fréquence d'échantillonnage, pour la ramener à celle du signal audio reçu (afin d'avoir toujours des signaux de même fréquence d'échantillonnage). L'unité de traitement 4 procède dans ce cas à un rééchantillonnage du signal résultant Sr, de manière à obtenir un signal rééchantillonné ayant une fréquence d'échantillonnage égale à celle du signal audio reçu : étape E8. Les paramètres de surveillance sont alors obtenus à partir du signal rééchantillonné.

Cette étape E8 est réalisée avant le calcul du spectrogramme (et donc par exemple entre l'étape E5 et l'étape E6), ou bien après le calcul du spectrogramme (et donc par exemple entre l'étape E6 et l'étape E7) en « complétant » alors l'image du spectrogramme (par des données vierges) dans les hautes fréquences.

On s'intéresse maintenant plus particulièrement à l'étape E7.

La détection de l'anomalie sonore consiste à exécuter une inférence d'un modèle d'apprentissage automatique préalablement entraîné, en utilisant les paramètres de surveillance comme données d'entrée. Les paramètres de surveillance sont ici des spectrogrammes dits « courants », chaque spectrogramme courant étant associé à un enregistrement du signal sonore ambiant Sa (et donc du signal audio reçu Sar ou du signal résultant Sr). L'anomalie sonore est détectée en fonction d'au moins une valeur de sortie obtenues par l'exécution de ladite inférence.

La classification est ici une classification d'images et non de signaux audios ou sonores.

On utilise par exemple la bibliothèque *TensorFlow Lite,* qui est une version dédiée à l'inférence, optimisée pour les environnements embarqués.

L'inférence est exécutée sur le NPU 5 via des API (pour *Application Programming Interface* que l'on traduit par interface de programmation d'application) dédiées (telles que NNAPI sous Android).

En utilisant la bibliothèque *TensorFlow Lite,* la transformation en spectrogramme courant du signal audio reçu Sar peut par exemple être réalisée en utilisant le code suivant :

```
def get_spectrogram(waveform,padding=False,
    min_padding=48000):
        waveform = tf.cast(waveform, tf.float32)
        spectrogram = tf.signal.stft(waveform,
    frame_length=2048, frame_step=512, fft_length=2048)
        spectrogram = tf.abs(spectrogram)
        return spectrogram
```

Cette étape correspond alors à l'étape de transformation fréquentielle E5.

Dans cette section de code, tf.signal.stft permet de réaliser une transformée de Fourier à court terme (*Short Term Fourier Transform*), et tf.abs retire l'information de phase, ne conservant que l'information d'amplitude.

Le NPU 5 applique donc un modèle d'inférence sur les spectrogrammes courants. Le modèle d'inférence a été obtenu par l'entraînement préalable du modèle d'apprentissage.

L'entraînement nécessite une base de données. Cette base de données comprend des enregistrements obtenus à partir d'un corpus d'enregistrements d'appareils « sains » et d'un corpus d'enregistrements d'appareils « défaillants ». Les appareils défaillants comportent par exemple des bruits de bobine, tels que précédemment décrits, à différentes fréquences et différentes amplitudes. Le corpus « défaillant » peut être constitué d'enregistrements d'appareils réellement défaillants et d'enregistrements d'appareils sains auxquels on aura superposé un signal « défaillant » (technique dite d'augmentation du jeu de données). Le corpus comprend à la fois des signaux de défaillance statiques (ou quasi-statiques) et transitoires/intermittents (tels que correspondant à la description précédente).

Comme on l'a vu, les données utilisées pour produire les spectrogrammes courants peuvent être obtenus soit à partir des signaux audio reçus eux-mêmes (traités éventuellement), soit à partir de signaux résultants Sr obtenus par l'application du module d'annulation d'écho 11 sur les signaux audio reçus Sar.

Il convient donc :

- soit d'avoir dans le corpus, formant la base de données d'entraînement, des enregistrements avec et sans AEC,
- ou bien d'utiliser deux modèles d'inférence, c'est-à-dire un modèle avec utilisation du module d'annulation d'écho 11, et un modèle sans utilisation dudit module. Ainsi, si le signal audio reçu Sar a été appliqué en entrée du module d'annulation d'écho 11, le NPU 5 utilise un premier modèle d'inférence. Sinon, le NPU 5 utilise un deuxième modèle d'inférence.

Si l'on opte pour cette seconde possibilité, il n'est alors plus nécessaire d'étendre le spectre des enregistrements réalisés en sortie d'AEC (rééchantillonnage réalisé à l'étape E8). La qualité de la détection sera meilleure avec cette seconde possibilité, les deux modèles étant alors utilisés systématiquement sur des données correspondant mieux aux caractéristiques de chacun des jeux d'entrainement.

Le modèle entraîné peut être un modèle personnalisé. Il est aussi possible d'utiliser le transfert d'entrainement (*transfer learning*) sur un modèle pré-entrainé.

Le modèle d'apprentissage automatique est ici un modèle de réseau de neurones artificiels.

Le modèle de réseau de neurones artificiels utilisé est par exemple de type réseau neuronal convolutif (CNN, pour *Convolutional Neural Network*), par exemple *MobileNet* ou *InceptionNet.*

Le modèle pourrait aussi par exemple être de type perceptron multicouche (MPL, pour *MultiLayer Perceptron*)*.*

Les CNN sont plus adaptés à la classification d'images que les MLP, mais ces derniers sont aussi très efficaces.

On note qu'il n'est pas possible d'utiliser directement un modèle pré-entrainé « usuel », car les caractéristiques (types de sons) que l'invention vise à détecter ne font pas partie des sons « habituels » des modèles pré-entrainés usuels, et donc les modèles pré-entrainés n'ont pas de classificateur pour les défauts pouvant être détectés.

Le modèle d'inférence obtenu est ensuite converti en modèle *TensorFlow lite,* afin de pouvoir être utilisé sur le boîtier décodeur 1. Afin d'améliorer la vitesse d'exécution du modèle et réduire sa taille, il peut être avantageux de réduire sa précision en requantifiant ses paramètres, afin de réduire la précision nécessaire (par exemple passage de valeurs flottantes 32 bits en valeurs flottantes 16 bits, ou en valeurs entières).

Le résultat de l'exécution de l'inférence, sur un spectrogramme courant correspondant à un enregistrement d'un signal audio reçu Sar particulier, est donc le résultat d'une classification dudit enregistrement, c'est-à-dire une « probabilité » que l'enregistrement appartienne à la catégorie « Sain », et une autre « probabilité » d'appartenance à la catégorie « Défaillant ».

En réalité, il ne s'agit pas d'une probabilité au sens statistique/mathématique, mais d'un « poids » indiquant une appartenance plus ou moins probable aux catégories.

On obtient ainsi un couple de valeurs de sortie pour les variables « Sain » et « Défaillant ».

Par exemple, le résultat de l'exécution de l'inférence est :

*Sain* -> 0.850647
*Défaillant* -> 0.060796

On constate que la somme des deux valeurs de sortie n'est pas égale à « 1 », comme cela serait le cas si les valeurs exprimaient une probabilité mathématique.

L'unité de traitement 4 peut, pour normaliser les valeurs de sortie afin que la somme des valeurs issues des classifications soit égale à 1, appliquer une fonction de type *Softmax* sur les valeurs de sortie. Les valeurs résultantes correspondront alors à une probabilité.

On décrit maintenant la manière dont sont utilisées les valeurs de sortie : étape E9.

Il est possible d'utiliser uniquement les valeurs de sortie du dernier enregistrement effectué pour déterminer si le boîtier décodeur 1 doit être considéré comme défaillant ou étant à risque de défaillance prochaine.

Avantageusement, cependant, l'unité de traitement 4 utilise une pluralité d'acquisitions et d'enregistrements du signal audio reçu, et exécute une inférence du modèle d'apprentissage pour chaque acquisition. Puis, l'unité de traitement 4 filtre les valeurs de sortie obtenues pour obtenir au moins une valeur filtrée. L'unité de traitement 4 compare alors la valeur filtrée et/ou une variation de la valeur filtrée avec des seuils prédéfinis pour détecter l'anomalie sonore.

L'utilisation d'une pluralité d'enregistrements (par exemple 3 ou 5) et le filtrage permettent d'assurer que le bruit ne provient pas d'un élément externe intermittent.

L'unité de traitement 4 peut ainsi par exemple émettre une alarme si la valeur de sortie de la variable *Défaillant,* pour au moins M des N derniers enregistrements, a une valeur supérieure à un seuil prédéterminé S (par exemple, M = 2 et N = 3, ou M = 3 et N = 5, et S = 0,2).

L'unité de traitement 4 peut aussi conserver des valeurs de sortie obtenues sur une durée prédéfinie relativement longue, par exemple égale à 1 mois ou à 6 mois, pour permettre d'analyser l'évolution des valeurs de sortie.

L'unité de traitement 4 analyse l'évolution des valeurs de sortie sur la durée prédéfinie, ce qui permet de détecter une dégradation progressive du fonctionnement d'un ou de plusieurs des composants surveillés, pouvant éventuellement se traduire par une future défaillance du boîtier décodeur 1.

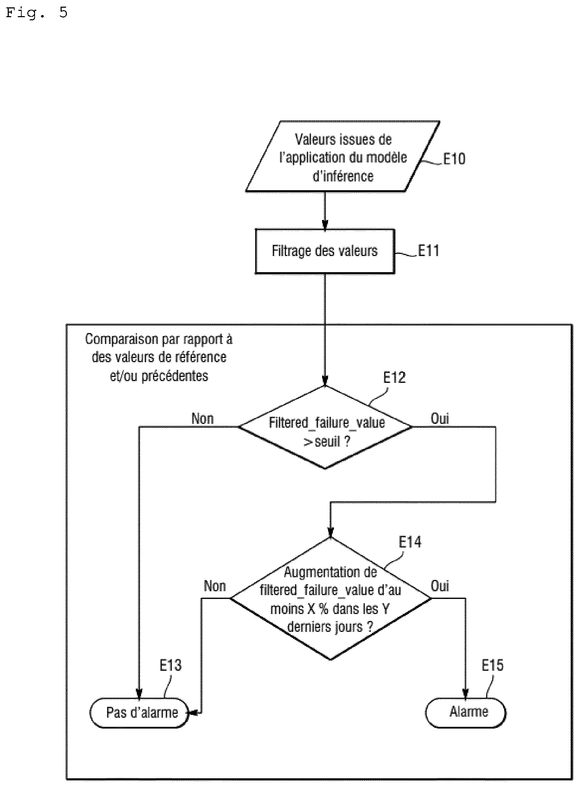

En référence à la figure 5, l'unité de traitement 4 met en œuvre le traitement suivant, qui combine les stratégies qui viennent d'être décrites.

Les valeurs de sortie sont obtenues suite à l'exécution de l'inférence du modèle d'apprentissage automatique et donc à l'application du modèle d'inférence (étape E10).

Ces valeurs sont alors filtrées pour obtenir une valeur de sortie filtrée « filtered_failure_value » : étape E11. De nombreuses stratégies de filtrage sont possible, le but étant in fine de réduire l'impact potentiel de bruits externes captés pendant l'enregistrement, qui pourraient influencer les résultats de la classification

Le filtrage comprend possiblement les étapes de calculer une moyenne ou une médiane de valeurs de sortie.

Le filtrage peut consister par exemple à conserver les K valeurs les plus faibles de la valeur de sortie « Défaillant » (par exemple, K = 2), puis à calculer une moyenne de ces K valeurs, et à affecter ladite moyenne à la valeur filtrée « filtered_failure_value ». L'avantage de ce filtrage est sa simplicité.

Alternativement, le filtrage peut consister à calculer la médiane des K valeurs les plus faibles de la valeur de sortie « Défaillant », et à affecter ladite médiane à la variable « filtered_failure_value ». Ce filtrage permet de mieux réduire l'impact de captations parasites.

L'unité de traitement 4 compare alors la valeur filtrée avec un premier seuil prédéfini : étape E12. Le premier seuil prédéfini est par exemple égal à 0,2. Si la valeur filtrée est inférieure ou égale au premier seuil prédéfini, l'unité de traitement 4 ne génère pas d'alarme : étape E13.

Par contre, à l'étape E12, si la valeur filtrée est supérieure strictement au premier seuil prédéfini, l'unité de traitement 4 compare la variation (ici l'augmentation) de la valeur filtrée sur une première durée prédéfinie avec un deuxième seuil prédéfini : étape E14. Cette deuxième comparaison permet d'éviter de lever une alarme pour de faibles valeurs (qui auront plus tendance à causer une importante variation relative). Si l'augmentation de la valeur filtrée sur la première durée prédéfinie est strictement inférieure au deuxième seuil prédéfini, l'unité de traitement 4 ne génère pas d'alarme : étape E13. Par contre, si l'augmentation de la valeur filtrée sur la première durée prédéfinie est supérieure ou égale au deuxième seuil prédéfini, l'unité de traitement 4 génère une alarme : étape E15. Le deuxième seuil prédéfini est par exemple égal à 25% et la première durée prédéfinie à 30 jours.

On note que les valeurs de sortie résultant de l'exécution de l'inférence ne sont pas absolues, mais dépendent du modèle lui-même. Ainsi, en cas de modification ou de mise à jour du modèle, des valeurs de sortie obtenues par un nouveau modèle ne peuvent plus être directement comparées à celles obtenues par l'application d'un précédent modèle. L'unité de traitement 4 ne doit donc pas comparer directement de telles données hétérogènes.

Deux moyens principaux peuvent être utilisés pour éviter cet écueil :

- en cas de mise à jour du modèle, l'unité de traitement 4 n'utilise que des nouvelles données pour effectuer les comparaisons ;
- en cas de mise à jour du modèle, si les enregistrements précédents ont été conservés, l'unité de traitement 4 soumet ces précédents enregistrements au nouveau modèle, afin d'obtenir de nouvelles valeurs résultantes.

Les valeurs de sortie obtenues peuvent être conservées en local, ou bien être remontées par le boîtier décodeur 1 à une « tête de réseau » (head-end), c'est-à-dire à des serveurs gérés par l'opérateur du réseau. La remontée de données est réalisable via des moyens connus, comme par exemple via un protocole de type TR-069, ou tout simplement via une requête http du boîtier décodeur 1 vers un serveur de l'opérateur.

Il est ainsi possible d'analyser les résultats du procédé de diagnostic obtenus pour de nombreux boîtiers décodeurs, et, par exemple, de comparer les résultats obtenus pour un boîtier décodeur particulier avec le vieillissement global du parc.

Optionnellement, l'opérateur (ou son support technique) est capable d'interroger le boîtier décodeur 1 pour que celui-ci lui transmette des enregistrements ayant servi à la détection, pour différents buts tels que par exemple :

- une détection avec des modèles plus précis ;
- une détection selon des moyens différents ;
- une analyse par un expert ;
- l'enrichissement du modèle de détection.

On pourra ensuite choisir, en cas de panne future probable (ou de dépassement d'un seuil d'alarme), de communiquer cette information à l'utilisateur, ou de la mettre à disposition du support technique.

On note que le modèle d'inférence de détection peut être mis à jour, par exemple par un téléchargement depuis un serveur de l'opérateur (via HTTP) ou un téléchargement depuis un carrousel (données de type DVB).

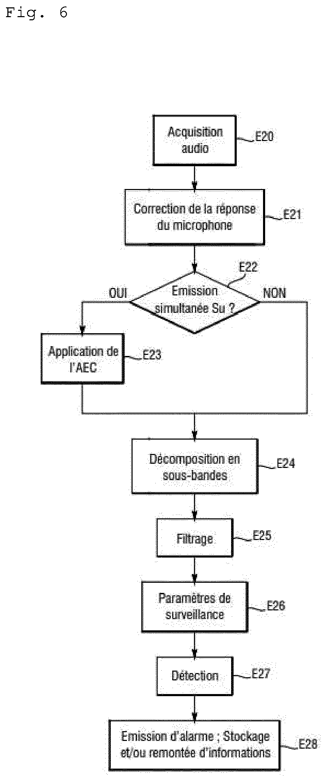

On décrit maintenant, en référence à la figure 6, un deuxième mode de réalisation du procédé de diagnostic selon l'invention. La détection de l'anomalie sonore repose sur l'évolution de l'émission sonore des composants surveillés, en comparant le spectre sonore actuel au spectre sonore d'une ancienne mesure (précédente mesure), ou d'une mesure « par défaut », déterminée lors de la fabrication ou la conception du boîtier décodeur 1, représentant celle d'un boîtier décodeur déterminé comme « sain » (mesure de référence).

Le procédé de diagnostic débute par une étape d'acquisition audio (étape E20). Les microphones internes 10 capturent le signal sonore ambiant Sa, et l'unité de traitement 4 acquiert le signal audio reçu Sar produit par les microphones internes 10.

Avantageusement, l'unité de traitement 4 réalise une pluralité d'acquisitions et d'enregistrements du signal audio reçu Sar, afin d'assurer que le bruit perçu ne provient pas d'un élément externe intermittent.

Avantageusement, l'unité de traitement 4 met en œuvre une compensation du signal audio reçu Sar en appliquant sur le signal audio reçu Sar une égalisation : étape E21.

L'unité de traitement 4 détecte alors si, au moment de la capture du signal sonore ambiant Sa, le boîtier décodeur 1 est en train ou on de restituer un signal sonore utile Su : étape E22.

Si le boîtier décodeur 1 est en train d'émettre un signal sonore utile Su, le signal audio reçu Sar et le signal audio émis Sae sont appliqués en entrée du module d'annulation d'écho 11, afin d'éliminer autant que possible le signal audio émis du signal audio reçu : étape E23.

Suite à l'étape E22 ou à l'étape E23 (selon que le module d'annulation d'écho 11 est ou non activé), pour chaque acquisition et enregistrement, l'unité de traitement 4 décompose le signal audio reçu Sar en signaux audio élémentaires sur des sous-bandes de fréquences : étape E24. L'unité de traitement 4 calcule alors une valeur d'énergie élémentaire de chaque signal audio élémentaire.

Pour cela, l'unité de traitement 4 peut appliquer un banc de filtres sur le signal audio reçu « d'origine », c'est-à-dire sur les échantillons, dans le domaine temporel, qui constituent le signal audio reçu.

L'unité de traitement 4 peut aussi transformer le signal audio reçu dans le domaine temporel en un signal dans le domaine fréquentiel, auquel cas il suffit de grouper les coefficients selon les sous-bandes définies. Un nombre plus important de sous-bandes permet une analyse plus fine, mais rend plus complexes les calculs. Des sous-bandes d'une largeur de 1kHz ou de 2kHz permettent un bon compromis.

Pour chaque acquisition, l'unité de traitement 4 obtient donc une liste de sous-bandes de fréquences associées chacune à une valeur d'énergie élémentaire.

Pour chaque sous-bande de fréquence, l'unité de traitement 4 réalise un deuxième filtrage sur les valeurs d'énergie élémentaire associées à ladite sous-bande de fréquences (et issues de la pluralité d'enregistrements) pour produire une valeur d'énergie élémentaire filtrée associée à ladite sous-bande de fréquences : étape E25.

Les paramètres de surveillance, obtenus à partir des valeurs d'énergie élémentaire, sont les valeurs d'énergie élémentaire filtrées : étape E26.

Le deuxième filtrage peut consister, pour l'unité de traitement 4, à utiliser un nombre prédéfini (5 par exemple) d'enregistrements espacés d'une durée prédéfinie (30 minutes par exemple). Puis, pour chaque sous-bande de fréquences, l'unité de traitement 4 calcule la valeur médiane des valeurs d'énergie élémentaire, et ne conserve que cette valeur médiane. Ceci permet de réduire grandement l'influence d'une captation « parasite », qui n'aura qu'une influence très limitée sur la médiane (au contraire d'une moyenne, qui serait bien plus influencée par de potentielles valeurs non représentatives).

Le deuxième filtrage peut consister, pour l'unité de traitement 4, à utiliser une moyenne centrée qui combine une meilleure résistance au bruit que la médiane et une meilleure résistance aux valeurs extrêmes que la moyenne. Par exemple, si l'unité de traitement 4 a réalisé cinq enregistrements, l'unité de traitement 4 élimine le minimum et le maximum et calcule la moyenne des trois autres mesures, ou bien élimine les deux mesures les plus éloignées de la médiane et calcule la moyenne des trois mesures les plus proches.

Puis, l'unité de traitement 4 détecte à partir des paramètres de surveillance une anomalie sonore résultant d'une défaillance d'au moins un composant électrique 12 du boîtier décodeur 1 : étape E27.

L'étape de détection consiste à comparer, pour chaque sous-bande de fréquences, la valeur d'énergie élémentaire filtrée avec un troisième seuil prédéfini, et/ou consiste à comparer, pour chaque sous-bande de fréquences, une variation des valeurs d'énergie élémentaire filtrées sur une deuxième durée prédéfinie avec un quatrième seuil prédéfini pour détecter l'anomalie sonore.

L'unité de traitement 4 peut donc réaliser soit l'une des deux comparaisons, soit les deux, et détecter une anomalie sonore si un seul seuil est dépassé, ou bien si les deux seuils sont dépassés.

Suite à la détection, les valeurs obtenues peuvent être conservées en local, ou bien être remontées par le boîtier décodeur 1 au head-end : étape E28.

On décrit maintenant un troisième mode de réalisation du procédé de diagnostic selon l'invention.

Cette fois, l'unité de traitement 4 calcule une transformée de Fourier rapide (ou FFT, pour *Fast Fourier Transform*) du signal audio reçu Sar ou du signal résultant Sr, et conserve uniquement les valeurs d'amplitude du signal dans le domaine fréquentiel (la composant de phase de la FFT n'est ici pas utilisée).

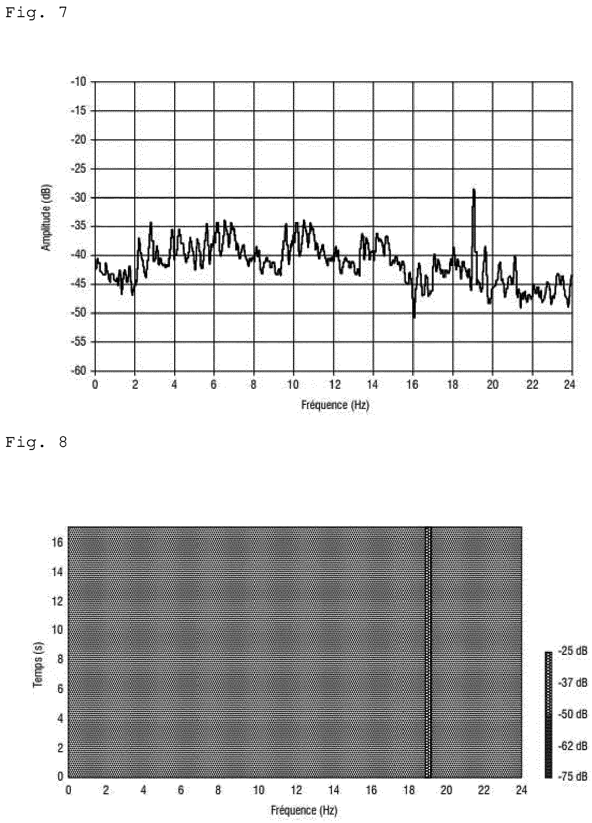

L'unité de traitement 4 réalise donc la détection à partir d'une représentation fréquentielle simple du signal audio reçu Sar ou du signal résultant Sr, semblable à la représentation fréquentielle visible sur la figure 7. Sur cette figure 7, on observe un bruit à la fréquence de 19kHz.

L'unité de traitement 4 détecte alors des pics dans la représentation spectrale. L'unité de traitement 4 conserve alors une liste de pics détectés, ainsi que leur valeur (ce qui peut être assimilable à une version très simplifié de calcul d'enveloppe spectrale).

Les paramètres de surveillance sont obtenus à partir de couples comprenant chacun une fréquence ou une sous-bande de fréquences, et une amplitude d'un pic à ladite fréquence ou dans ladite sous-bande de fréquences.

Par exemple, l'unité de traitement 4 ne conserve qu'un nombre prédéterminé N des pics les plus importants, par exemple les 3 ou 5 pics les plus importants. L'unité de traitement 4 obtient donc une liste de N couples [fréquence ; amplitude].

Les couples obtenus sont par exemple les suivants :
[[8.24kHz ; -72dB] ; [12.65kHz ; -43dB] ; [16.64kHz ; -68dB]].

L'étape de détection consiste à nouveau à comparer les paramètres de surveillance avec des troisièmes seuils prédéfinis et/ou à comparer des variations des paramètres de surveillance, sur une deuxième durée prédéfinie, avec des quatrièmes seuils prédéfinis pour détecter l'anomalie sonore.

Ainsi, par exemple, pour chaque couple, l'unité de traitement 4 compare la valeur de l'amplitude du pic avec un troisième seuil prédéfini et détecte une anomalie sonore si ladite valeur est supérieure au troisième seuil prédéfini.

Alternativement, par exemple, pour chaque couple, l'unité de traitement 4 compare la variation, sur la deuxième durée prédéfinie, de la valeur de l'amplitude du pic avec un quatrième seuil prédéfini, et détecte une anomalie sonore si ladite variation est supérieure au quatrième seuil prédéfini.

Ces différentes méthodes de détection peuvent être appliquées sur une représentation fréquentielle simple (une seule valeur moyennée par fréquence pour toute la durée de l'échantillon capté), ou sur une représentation fréquentielle montrant l'évolution temporelle, de type spectrogramme.

Un tel spectrogramme, obtenu pour un signal similaire à celui ayant permis d'obtenir la représentation fréquentielle visible sur la figure 7, est visible sur la figure 8.

Pour répondre aux objectifs de détection, la durée de l'échantillon captée étant relativement courte (par exemple de l'ordre de la seconde ou moins), et comme les défauts à détecter présentent des caractéristiques relativement constantes sur un tel laps de temps, une représentation fréquentielle simple aura l'avantage, par rapport à un spectrogramme, de réduire les calculs nécessaires à la détection, et de réaliser un moyennage temporel permettant de filtrer les valeurs (réduction du bruit du signal).

Le traitement des données issues de la détection peut prendre plusieurs formes.

L'unité de traitement 4 peut détecter une anomalie sonore et générer une alarme sur la base uniquement du dernier enregistrement réalisé : dès qu'un signal d'anomalie est produit, l'unité de traitement 4 détecte une anomalie sonore.

De préférence, l'unité de traitement 4 utilise plusieurs enregistrements successifs, afin de s'assurer que le bruit ne provient pas d'un élément externe intermittent.

Pour chaque fréquence ou sous-bande de fréquences, l'unité de traitement 4 réalise un troisième filtrage sur les amplitudes des pics associés à ladite fréquence ou sous-bande de fréquences pour produire une amplitude de pic filtrée associée à ladite fréquence ou sous-bande de fréquences, les paramètres de surveillance étant les amplitudes de pic filtrées.

L'unité de traitement peut ainsi tenir compte d'un nombre prédéfini N des derniers enregistrements pour détecter une anomalie sonore ; par exemple, N=3 ou 5.

Ainsi, si un signal d'anomalie est produit pour chacun des N derniers enregistrements, ou bien pour au moins M enregistrements sur les N derniers enregistrements, une anomalie sonore est détectée. Par exemple, l'unité de traitement 4 génère une alarme si un signal d'anomalie est produit pour au moins 2 des 3 derniers enregistrements (c'est-à-dire si l'un des pics a une amplitude supérieure à -50dB sur 2 des 3 derniers enregistrements).

L'unité de traitement 4 peut aussi détecter une anomalie sur la base de l'évolution des paramètres de surveillance.

L'unité de traitement 4 peut alors stocker les pics et les fréquences sur un historique long de durée prédéfinie, par exemple de plusieurs semaines (voire de plusieurs mois). L'unité de traitement 4 utilise cet historique long des valeurs issues de la détection, pour permettre ensuite l'analyse de leur évolution.

Les augmentations des paramètres de surveillance détectés au fur et à mesure du temps (évolution sur plusieurs semaines) permettront de caractériser un boîtier décodeur se dégradant, et pouvant éventuellement être sujet à une défaillance prochaine.

Pour une date donnée, l'unité de traitement 4 conserve par exemple dans l'historique long, pour chaque fréquence ou sous-bande de fréquences, une moyenne d'un nombre prédéterminé des amplitudes de pic filtrées les plus faibles.

Chaque sous-bande de fréquences est par exemple définie par une variation fréquentielle faible, par exemple +/-500Hz, autour d'une fréquence centrale (soit une plage totale de 1000Hz).

On suppose par exemple que l'unité de traitement 4 a réalisé trois enregistrements qui donnent les mesures suivantes :

[[8.24kHz ; -72dB] ; [12.65kHz ; -43dB] ; [16.64kHz ; -68dB]]
[[7.11kHz ; -78dB] ; [12.38kHz ; -41dB] ; [13.25kHz ; -30dB]]
[[6.08kHz ; -71dB] ; [12.42kHz ; -43dB] ; [16.01 kHz ; -65dB]]

Le premier jeu de valeurs (aux alentours de 7kHz) ne présente pas au moins 2 valeurs dans une plage de +/-500Hz, il n'est donc pas conservé.

Le second jeu de valeurs (aux alentours de 12kHz) présente 3 valeurs situées dans une plage de +/-500Hz. L'unité de traitement 4 retiendra donc la moyenne des 2 valeurs les plus faibles ([12.35kHz ; -43dB] et [12.42kHz ; -43dB]), et donc [12.54kHz ; -43dB]. On note que les dB sont des valeurs logarithmiques, et qu'il n'est donc pas possible de calculer directement une moyenne linéaire de valeurs en dB. Il faut tout d'abord linéariser les valeurs :

$$X\_lin = 10\textasciicircum(X\_dB/10),$$

puis effectuer la moyenne des valeurs linéaires, puis convertir la moyenne en dB :

$$X\_dB = 10*log(X\_lin).$$

Le troisième jeu de valeurs ne présente que 2 valeurs situées dans une plage de +/-500Hz. L'unité de traitement 4 retiendra donc la moyenne de ces 2 valeurs ([16.64kHz ; - 68dB] et [16.01kHz ; -65dB]), ce qui donne [16.33kHz ; - 66dB].

La troisième valeur ([13.25kHz ; -30dB]), transitoire, est probablement due à un bruit externe (comme par exemple un autre appareil à proximité), et se trouve filtrée par la méthode de sélection.

Dans cet exemple, l'unité de traitement 4 retiendra donc dans l'historique long les valeurs :
[[12.54kHz ; -43dB] ; [16.33kHz ; -66dB]]

L'unité de traitement 4 génère une alarme si, par exemple, l'une des amplitudes du pic associé à une sous-bande de fréquences augmente de plus de X%.

Afin d'éviter de lever une alarme pour de faibles valeurs (qui auront plus tendance à causer une importante variation relative), une comparaison avec un seuil peut être ajoutée.

Par exemple, l'unité de traitement 4 produit un message d'alarme si, pour une bande de fréquences donnée (par exemple +/-500Hz autour d'une fréquence centrale donnée), l'amplitude du pic dans ladite bande de fréquences augmente d'au moins 10% sur une durée de 30 jours.

D'autres stratégies peuvent être appliquées (à la place ou en plus), comme par exemple de générer une alarme si une valeur (après application d'une méthode de filtrage telle que précédemment décrit) est supérieure à -40dB.

Bien entendu, l'invention n'est pas limitée aux modes de réalisation décrits mais englobe toute variante entrant dans le champ de l'invention telle que définie par les revendications.

L'équipement électrique dans lequel est mise en œuvre l'invention n'est pas nécessairement un boîtier décodeur, mais peut être tout équipement électrique comprenant ou pouvant être relié à un ou des microphones : enceinte connectée, ordinateur, *smartphone,* console de jeux, etc.

L'architecture de l'équipement électrique peut bien sûr être différente de celle décrite ici.

Le NPU peut réaliser uniquement l'application du modèle d'inférence, mais aussi mettre en œuvre une autre ou d'autres étapes du procédé de diagnostic. L'unité de traitement ne comprend pas nécessairement un NPU. L'application du modèle d'inférence n'est donc pas nécessairement réalisée dans un NPU, mais pourrait être réalisé dans tout type de composant adapté (DSP, GPU, etc.).

**Revendications**

**1.** Procédé de diagnostic d'un équipement électrique (1) qui comporte :

- une unité de traitement (4) ;
- au moins un microphone interne (10), et/ou des moyens de connexion à au moins un microphone externe ;
- des composants électriques (12) autres que des microphones ou des haut-parleurs ;

le procédé de diagnostic étant mis en œuvre au moins partiellement dans l'unité de traitement (4) et comprenant les étapes de :

- acquérir un signal audio reçu (Sar) produit, à partir d'une capture d'un signal sonore ambiant (Sa), par le au moins un microphone interne ou par le au moins un microphone externe ;
- produire à partir du signal audio reçu des paramètres de surveillance qui sont représentatifs d'un signal sonore parasite (Sp) compris dans le signal sonore ambiant et émis par au moins l'un des composants électriques (12) ;
- détecter à partir des paramètres de surveillance une anomalie sonore résultant d'une défaillance actuelle ou à venir d'au moins un composant électrique (12) de l'équipement électrique,

le procédé étant **caractérisé en ce qu'**il comprend en outre les étapes :

- de détecter si l'équipement électrique (1), au moment de l'étape d'acquisition, est en train d'émettre un signal sonore utile (Su), qui est formé de sons émis volontairement ;
- si c'est le cas, d'appliquer le signal audio reçu (Sar) en entrée d'un module d'annulation d'écho (11), pour produire un signal résultant (Sr), les paramètres de surveillance étant obtenus à partir du signal résultant.

2. Procédé de diagnostic selon la revendication 1, dans lequel l'étape de détection comprend les étapes de :

- exécuter une inférence d'un modèle d'apprentissage automatique préalablement entraîné, en utilisant les paramètres de surveillance comme données d'entrée, le modèle d'apprentissage automatique étant un modèle de classification ;
- détecter l'anomalie sonore en fonction d'au moins une valeur de sortie obtenue par l'exécution de ladite inférence.

3. Procédé de diagnostic selon la revendication 2, dans lequel les paramètres de surveillance forment des spectrogrammes courants issus du signal audio reçu, et dans lequel le modèle d'apprentissage automatique a été entraîné en utilisant une base de données comprenant des images représentant des spectrogrammes d'entraînement.

4. Procédé de diagnostic selon l'une des revendications 2 ou 3, dans lequel le modèle d'apprentissage automatique est un modèle de réseau de neurones artificiels de type réseau neuronal convolutif ou perceptron multicouche.

5. Procédé de diagnostic selon la revendication 1, comprenant en outre l'étape, si le signal audio reçu (Sar) est appliqué en entrée du module d'annulation d'écho (11), d'augmenter une fréquence d'échantillonnage du signal résultant (Sr), de manière à obtenir un signal rééchantillonné ayant une fréquence d'échantillonnage égale à celle du signal audio reçu, les paramètres de surveillance étant obtenus à partir du signal rééchantillonné.

6. Procédé de diagnostic selon la revendication 1, comprenant l'étape, si le signal audio reçu (Sar) a été appliqué en entrée du module d'annulation d'écho (11), d'utiliser un premier modèle d'inférence, et d'utiliser un deuxième modèle d'inférence sinon.

7. Procédé de diagnostic selon l'une des revendications 2 à 6, comprenant en outre les étapes de :

- réaliser une pluralité d'acquisitions du signal audio reçu (Sar) ;
- exécuter une inférence du modèle d'apprentissage pour chaque acquisition ;
- réaliser un premier filtrage des valeurs de sortie pour obtenir au moins une valeur filtrée ;
- comparer la valeur filtrée avec un premier seuil prédéfini et/ou une variation de la valeur filtrée sur une première durée prédéfinie avec un deuxième seuil prédéfini pour détecter l'anomalie sonore.

8. Procédé de diagnostic selon l'une des revendications 2 à 7, l'unité de traitement (4) comportant un NPU (5) dans lequel est réalisée au moins l'exécution de l'inférence du modèle d'apprentissage automatique.

9. Procédé de diagnostic selon la revendication 1, dans lequel l'étape de détection consiste à comparer les paramètres de surveillance avec des troisièmes seuils prédéfinis et/ou à comparer des variations des paramètres de surveillance, sur une deuxième durée prédéfinie, avec des quatrièmes seuils prédéfinis pour détecter l'anomalie sonore.

10. Procédé de diagnostic selon la revendication 9, comprenant en outre les étapes de :

- décomposer le signal audio reçu (Sar) en signaux audio élémentaires sur des sous-bandes de fréquences ;
- calculer une valeur d'énergie élémentaire de chaque signal audio élémentaire, les paramètres de surveillance étant obtenus à partir des valeurs d'énergie élémentaire.

11. Procédé de diagnostic selon la revendication 10, comprenant en outre les étapes de :

- réaliser une pluralité d'acquisitions du signal audio reçu ;
- pour chaque sous-bande de fréquences, réaliser un deuxième filtrage sur les valeurs d'énergie élémentaire associées à ladite sous-bande de fréquences pour produire une valeur d'énergie élémentaire filtrée associée à ladite sous-bande de fréquences, les paramètres de surveillance étant les valeurs d'énergie élémentaire filtrées.

12. Procédé de diagnostic selon la revendication 9, comprenant en outre les étapes de :

- produire une représentation spectrale du signal audio reçu ;
- détecter des pics dans la représentation spectrale ;

les paramètres de surveillance étant obtenus à partir de couples comprenant chacun une fréquence ou une sous-bande de fréquences, et une amplitude d'un pic à ladite fréquence ou dans ladite sous-bande de fréquences.

13. Procédé de diagnostic selon la revendication 12, comprenant en outre les étapes de :

- réaliser une pluralité d'acquisitions du signal audio reçu ;
- pour chaque fréquence ou sous-bande de fréquences, réaliser un troisième filtrage sur les amplitudes des pics associés à ladite fréquence ou sous-bande de fréquences pour produire une amplitude de pic filtrée associée à ladite fréquence ou sous-bande de fréquences, les paramètres de surveillance étant les amplitudes de pic filtrées.

14. Procédé de diagnostic selon la revendication 13, comprenant l'étape de conserver dans un historique long, pour chaque fréquence ou sous-bande de fréquences, une moyenne d'un nombre prédéterminé des amplitudes de pic filtrées les plus faibles.

15. Equipement électrique comportant :

- une unité de traitement (4) comprenant un NPU (5) ;
- au moins un microphone interne (10), et/ou des moyens de connexion à au moins un microphone externe ;
- des composants électriques (12) autres que des microphones ou des haut-parleurs ;

l'unité de traitement (4) étant agencée pour mettre en œuvre le procédé de diagnostic selon la revendication 2, et le NPU étant agencé pour réaliser au moins l'exécution de l'inférence du modèle d'apprentissage automatique.

16. Equipement électrique selon la revendication 15, l'équipement électrique étant un boîtier décodeur.

17. Programme d'ordinateur comprenant des instructions qui conduisent l'unité de traitement (4) de l'équipement électrique selon l'une des revendications 15 ou 16 à exécuter les étapes du procédé de diagnostic selon l'une des revendications 1 à 14 lorsque ledit programme est exécuté sur l'unité de traitement.

18. Support d'enregistrement lisible par ordinateur, sur lequel est enregistré le programme d'ordinateur selon la revendication 17.


**Patentansprüche**

1. Diagnoseverfahren zur Diagnose eines elektrischen Geräts (1), enthaltend:

- eine Verarbeitungseinheit (4),
- zumindest ein internes Mikrofon (10) und/oder Anschlussmittel zum Verbinden mit zumindest einem externen Mikrofon;
- andere elektrische Komponenten (12) als Mikrofone oder Lautsprecher;

wobei das Diagnoseverfahren zumindest teilweise in der Verarbeitungseinheit (4) ausgeführt wird und die Schritte umfasst, dass:

- ein Audio-Empfangssignal (Sar) erfasst wird, welches ausgehend von einer Erfassung eines Umgebungsschallsignals (Sa) von dem zumindest einen internen Mikrofon oder von dem zumindest einen externen Mikrofon erzeugt worden ist;
- aus dem Audio-Empfangssignal Überwachungsparameter erzeugt werden, die ein Störschallsignal (Sp) darstellen, das in dem Umgebungsschallsignal enthalten ist und von zumindest einer der elektrischen Komponenten (12) ausgesendet wird;
- aus den Überwachungsparametern eine Schallanomalie erkannt wird, die aus einem aktuellen oder bevorstehenden Ausfall zumindest einer elektrischen Komponente (12) des elektrischen Geräts resultiert,

**dadurch gekennzeichnet, dass** das Verfahren ferner die Schritte umfasst, dass:

- erkannt wird, ob das elektrische Gerät (1) zum Zeitpunkt des Erfassungsschritts ein Nutzschallsignal (Su) aussendet, das aus bewusst gesendeten Tönen gebildet ist;
- wenn dies der Fall ist, das Audio-Empfangssignal (Sar) an den Eingang eines Echokompensationsmoduls (11) angelegt wird, um ein resultierendes Signal (Sr) zu erzeugen, wobei die Überwachungsparameter aus dem resultierenden Signal gewonnen werden.

2. Diagnoseverfahren nach Anspruch 1, wobei der Erkennungsschritt die Schritte umfasst, dass:

- eine Inferenz aus einem zuvor trainierten maschinellen Lernmodell unter Verwendung der Überwachungsparameter als Eingabedaten ausgeführt wird, wobei es sich bei dem maschinellen Lernmodell um ein Klassifikationsmodell handelt;
- die Schallanomalie in Abhängigkeit von zumindest einem durch die Ausführung der Inferenz gewonnenen Ausgabewert erkannt wird.

3. Diagnoseverfahren nach Anspruch 2, wobei die Überwachungsparameter aktuelle Spektrogramme des Audio-Empfangssignals bilden, und wobei das maschinelle Lernmodell unter Verwendung einer Trainings-Spektrogrammbilder umfassenden Datenbasis trainiert wurde.

4. Diagnoseverfahren nach einem der Ansprüche 2 oder 3, wobei es sich bei dem maschinellen Lernmodell um ein künstliches neuronales Netzwerk vom Typ konvolutives neuronales Netzwerk oder mehrschichtiges Perzeptron handelt.

5. Diagnoseverfahren nach Anspruch 1, ferner umfassend den Schritt, dass, wenn das Audio-Empfangssignal (Sar) an den Eingang des Echokompensationsmoduls (11) angelegt wird, eine Abtastfrequenz des resultierenden Signals (Sr) erhöht wird, um ein erneut abgetastetes Signal mit einer Abtastfrequenz zu erhalten, die gleich jener des Audio-Empfangssignals ist, wobei die Überwachungsparameter aus dem erneut abgetasteten Signal gewonnen werden.

6. Diagnoseverfahren nach Anspruch 1, umfassend den Schritt, dass, wenn das Audio-Empfangssignal (Sar) an den Eingang des Echokompensationsmoduls (11) angelegt wurde, ein erstes Inferenzmodell angewandt wird, und ansonsten ein zweites Inferenzmodell angewandt wird.

7. Diagnoseverfahren nach einem der Ansprüche 2 bis 6, ferner umfassend die Schritte, dass:

- eine Mehrzahl von Erfassungen des Audio-Empfangssignals (Sar) durchgeführt wird;
- für jede Erfassung eine Inferenz aus dem Lernmodell ausgeführt wird;
- eine erste Filterung der Ausgabewerte durchgeführt wird, um zumindest einen gefilterten Wert zu erhalten;
- der gefilterte Wert mit einem ersten vorgegebenen Schwellenwert verglichen wird und/oder eine Schwankung des gefilterten Werts während einer ersten vorgegebenen Zeitdauer mit einem zweiten vorgegebenen Schwellenwert verglichen wird, um die Schallanomalie zu erkennen.

8. Diagnoseverfahren nach einem der Ansprüche 2 bis 7, wobei die Verarbeitungseinheit (4) eine NPU (5) enthält, in welcher zumindest die Ausführung der Inferenz aus dem maschinellen Lernmodell erfolgt.

9. Diagnoseverfahren nach Anspruch 1, wobei der Erkennungsschritt darin besteht, dass die Überwachungsparameter mit dritten vorgegebenen Schwellenwerten verglichen werden und/oder Schwankungen der Überwachungsparameter während einer zweiten vorgegebenen Zeitdauer mit vierten vorgegebenen Schwellenwerten verglichen werden, um die Schallanomalie zu erkennen.

10. Diagnoseverfahren nach Anspruch 9, ferner die Schritte umfassend, dass:

   - das Audio-Empfangssignal (Sar) in Audio-Elementarsignale auf Frequenzunterbändern zerlegt wird;
   - ein elementarer Energiewert für jedes Audio-Elementarsignal berechnet wird, wobei die Überwachungsparameter aus den elementaren Energiewerten gewonnen werden.

11. Diagnoseverfahren nach Anspruch 10, ferner die Schritte umfassend, dass:

   - eine Mehrzahl von Erfassungen des Audio-Empfangssignals durchgeführt wird;
   - für jedes Frequenzunterband die dem betreffenden Frequenzunterband zugeordneten elementaren Energiewerte einer zweiten Filterung unterzogen werden, um einen dem jeweiligen Frequenzunterband zugeordneten gefilterten elementaren Energiewert zu erzeugen, wobei es sich bei den Überwachungsparametern um die gefilterten elementaren Energiewerte handelt.

12. Diagnoseverfahren nach Anspruch 9, ferner die Schritte umfassend, dass:

   - eine Spektraldarstellung des Audio-Empfangssignals erzeugt wird;
   - Spitzen in der Spektraldarstellung erkannt werden;

   wobei die Überwachungsparameter aus Paaren gewonnen werden, die jeweils eine Frequenz bzw. ein Frequenzunterband sowie eine Spitzenamplitude bei besagter Frequenz bzw. in besagtem Frequenzunterband umfassen.

13. Diagnoseverfahren nach Anspruch 12, ferner die Schritte umfassend, dass:

   - eine Mehrzahl von Erfassungen des Audio-Empfangssignals durchgeführt wird;
   - für jede Frequenz bzw. für jedes Frequenzunterband die der betreffenden Frequenz bzw. dem betreffenden Frequenzunterband zugeordneten Spitzenamplituden einer dritten Filterung unterzogen werden, um eine der betreffenden Frequenz bzw. dem betreffenden Frequenzunterband zugeordnete gefilterte Spitzenamplitude zu erzeugen, wobei es sich bei den Überwachungsparametern um die gefilterten Spitzenamplituden handelt.

14. Diagnoseverfahren nach Anspruch 13, umfassend den Schritt, dass für jede Frequenz bzw. für jedes Frequenzunterband ein Mittelwert aus einer vorbestimmten Anzahl der gefilterten niedrigsten Spitzenamplituden in einer Langzeithistorie gesichert wird.

15. Elektrisches Gerät, enthaltend:

   - eine Verarbeitungseinheit (4) umfassend eine NPU (5);
   - zumindest ein internes Mikrofon (10) und/oder Anschlussmittel zum Verbinden mit zumindest einem externen Mikrofon;
   - andere elektrische Komponenten (12) als Mikrofone oder Lautsprecher;

   wobei die Verarbeitungseinheit (4) dafür ausgelegt ist, das Diagnoseverfahren nach Anspruch 2 auszuführen, und die NPU dafür ausgelegt ist, zumindest die Ausführung der Inferenz aus dem maschinellen Lernmodell durchzuführen.

16. Elektrisches Gerät nach Anspruch 15, wobei es sich bei dem elektrischen Gerät um eine Decoderbox handelt.

17. Computerprogramm, das Befehle umfasst, welche die Verarbeitungseinheit (4) des elektrischen Geräts nach einem der Ansprüche 15 oder 16 dazu veranlassen, die Schritte des Diagnoseverfahrens nach einem der Ansprüche 1 bis 14 auszuführen, wenn das Programm in der Verarbeitungseinheit ausgeführt wird.

18. Computerlesbares Speichermedium, auf welchem das Computerprogramm nach Anspruch 17 abgespeichert ist.


**Claims**

1. Diagnostic method of electrical equipment (1) which comprises:

   a processing unit (4);
   at least one internal microphone (10), and/or means for connecting to at least one external microphone;
   electrical components (12) other than microphones or speakers;
   the diagnostic method being implemented at least partially in the processing unit (4) and comprising the steps of:

   acquiring a received audio signal (Sar) produced from capturing an ambient sound signal (Sa), by the at least one internal microphone or by the at least one external microphone;
   producing monitoring parameters from the received audio signal, which are representative of an interfering sound signal (Sp) comprised in the ambient sound signal and emitted by at least one of the electrical components (12);
   detecting a sound anomaly resulting from a current or future failure of at least one electrical component (12) of the electrical equipment from the monitoring parameters,

   the method being **characterized in that** it further comprising the steps:

   of detecting if the electrical equipment (1), at the time of the acquisition step, is in the process of emitting a useful sound signal (Su), which comprises sounds voluntarily emitted;
   if this is the case, of applying the received audio signal (Sar) at the input of an acoustic echo cancellation module (11), to produce a resulting signal (Sr), the monitoring parameters being obtained from the resulting signal.

2. Diagnostic method according to claim 1, wherein the detection step comprises the steps of:

   executing an inference of a previously trained automatic training model, by using the monitoring parameters as input data, the automatic training model being a classification model;
   detecting the sound anomaly according to at least one output value obtained by executing said inference.

3. Diagnostic method according to claim 2, wherein the monitoring parameters form current spectrograms coming from the received audio signal, and wherein the automatic training model has been trained by using a database comprising images representing training spectrograms.

4. Diagnostic method according to any one of claims 2 or 3, wherein the automatic training model is an artificial neural network of the convolutional neural network or multilayer perceptron type.

5. Diagnostic method according to claim 1, further comprising the step, if the received audio signal (Sar) is applied at the input of the acoustic echo cancellation module (11), to increase a sampling frequency of the resulting signal (Sr), so as to obtain a resampled signal having a sampling frequency equal to that of the received audio signal, the monitoring parameters being obtained from the resampled signal.

6. Diagnostic method according to claim 1, comprising the step, if the received audio signal (Sar) has been applied at the input of the acoustic echo cancellation module (11), to use a first inference model, and otherwise to use a second inference model.

7. Diagnostic method according to any one of claims 2 to 6, further comprising the steps of:

   performing a plurality of acquisitions of the received audio signal (Sar);
   executing an inference of the training model for each acquisition;
   performing a first filtering of the output values to obtain at least one filtered value;
   comparing the filtered value with a first predefined threshold and/or a variation of the filtered value over a first predefined duration with a second predefined threshold to detect the sound anomaly.

8. Diagnostic method according to any one of claims 2 to 7, the processing unit (4) comprising an NPU (5), wherein at least one execution of the inference of the automatic training model is performed.

9. Diagnostic method according to claim 1, wherein the detection step consists of comparing the monitoring parameters with third predefined thresholds and/or of comparing variations of the monitoring parameters, over a second predefined duration, with fourth predefined thresholds to detect the sound anomaly.

10. Diagnostic method according to claim 9, further comprising the steps of:

breaking down the received audio signal (Sar) into elementary audio signals on frequency sub-bands; calculating an elementary energy value of each elementary audio signal, the monitoring parameters being obtained from the elementary energy values.

11. Diagnostic method according to claim 10, further comprising the steps of:

performing a plurality of acquisitions of the received audio signal; for each frequency sub-band, performing a second filtering on the elementary energy values associated with said frequency sub-band to produce a filtered elementary energy value associated with said frequency sub-band, the monitoring parameters being the filtered elementary energy values.

12. Diagnostic method according to claim 9, further comprising the steps of:

producing a spectral representation of the received audio signal; detecting peaks in the spectral representation;

the monitoring parameters being obtained from pairs each comprising a frequency or a frequency sub-band, and an amplitude of a peak at said frequency or in said frequency sub-band.

13. Diagnostic method according to claim 12, further comprising the steps of:

performing a plurality of acquisitions of the received audio signal; for each frequency or frequency sub-band, performing a third filtering on the amplitudes of the peaks associated with said frequency or frequency sub-band to produce a filtered peak amplitude associated with said frequency or frequency sub-band, the monitoring parameters being the filtered peak amplitudes.

14. Diagnostic method according to claim 13, comprising the step of preserving in a long history, for each frequency or frequency sub-band, a mean of a predetermined number of the lowest filtered peak amplitudes.

15. Electrical equipment comprising:

a processing unit (4) comprising an NPU (5); at least one internal microphone (10), and/or means for connecting to at least one external microphone; electrical components (12) other than microphones or speakers;

the processing unit (4) being arranged to implement the diagnostic method according to claim 2, and the NPU being arranged to perform at least the execution of the inference of the automatic training model.

16. Electrical equipment according to claim 15, the electrical equipment being a set-top box.

17. Computer program comprising instructions which cause the processing unit (4) of the electrical equipment according to one of claims 15 or 16 to carry out the steps of the diagnostic method according to one of claims 1 to 14, when said program is executed on the processing unit.

18. Recording medium which can be read by a computer, on which the computer program according to claim 17 is recorded.

Fig. 1

Fig. 2

Fig. 3

Fig. 4

Fig. 5

Valeurs issues de l'application du modèle d'inférence — E10

Filtrage des valeurs — E11

Comparaison par rapport à des valeurs de référence et/ou précédentes

E12

Non — Filtered_failure_value > seuil ? — Oui

E14

Non — Augmentation de filtered_failure_value d'au moins X % dans les Y derniers jours ? — Oui

E13 — Pas d'alarme

E15 — Alarme

Fig. 6

Acquisition audio — E20

Correction de la réponse du microphone — E21

Emission simultanée Su ? — E22 / OUI / NON

Application de l'AEC — E23

Décomposition en sous-bandes — E24

Filtrage — E25

Paramètres de surveillance — E26

Détection — E27

Emission d'alarme ; Stockage et/ou remontée d'informations — E28

Fig. 7

Fig. 8

**RÉFÉRENCES CITÉES DANS LA DESCRIPTION**

**Documents brevets cités dans la description**

- DE 102018124210 A1